## Europäisches Patentamt
## European Patent Office
## Office européen des brevets

(19)

(11) Publication number: **0 203 650**
A2

(12) # EUROPEAN PATENT APPLICATION

(21) Application number: 86200829.9

(22) Date of filing: **14.05.86**

(51) Int. Cl.⁴: **B 23 Q 3/06**

(30) Priority: **30.05.85 BE 2060702**

(43) Date of publication of application: **03.12.86**
**Bulletin 86/49**

(84) Designated Contracting States: **DE IT**

(71) Applicant: **G.B. BOUCHERIE, N.V.,**
**Stuivenbergstraat 104-141, B-8700 Izegem (BE)**

(72) Inventor: **Boucherie, Leonel, Potaardestraat 3,**
**B-8810 Roeselare-Rumbeke (BE)**

(74) Representative: **Donné, Eddy, M.F.J.Bockstael**
**Arenbergstraat 13, B-2000 Anvers (BE)**

(54) **Gripping device for workpieces.**

(57) Gripping device for workpieces, characterized thereby that it mainly consists of the combination of a clamping table (1); a grip (3) which is rotatably fixed to an arm (2) rotatable around said clamping table (1), means (18–24) for moving said grip (3) at least towards said work face (16) in order to clamp a workpiece (17) between said grip (3) and said work face (16) of said clamping table (1), said arm (2), however, to which said grip (3) is fixed remaining rotatable when said workpiece (17) is being clamped.

## Gripping device for workpieces

This invention relates to a gripping device for workpieces, more particularly to a gripping device for being applied in machines for processing or machining workpieces in the neighbourhood of the periphery such as e.g. in milling machines and spindle moulders for profiling workpieces.

In particular, this invention relates to a gripping device comprising a grip that can be pressed onto a workpiece by means of a revolving arm and wherein by a rotation of said arm the possibility arises of allowing free passage to a tool, e.g., a cutter.

In a preferred embodiment, the gripping device according to the present invention is extremely well suited for clamping wooden brush bodies and other wooden articles on a machine table, wherein at least at the periphery they can be machined completely with a top miller in one single cycle of operations.

Many gripping devices for workpieces are known. Mostly, workpieces are clamped by means of grips that are fixed to a clamping table by means of grips and that make contact along the edges of the workpiece.

It is clear that for machining the entire periphery of the workpieces, as is the case with brush bodies, such a gripping device shows the disadvantage that the workpiece has to be clamped at least twice for allowing the entire periphery to be reached.

In other known devices the workpiece is clamped centrally at the top by means of a grip that is attached to a fixed arm.

Such a gripping device, however, has the disadvantage that the tool, particularly a cutter, cannot pass at the place where the arm has been fixed to the clamping table and/or the milling machine.

A relatively satisfying solution for the above-mentioned problem was offered by the vacuum gripping, according to which the workpiece is being sucked against the work face of the clamping table by means of inlets provided in the latter.

Such a gripping device is only efficient if the surface of the workpiece coming into contact with the work face is large enough and if the re-setting forces are kept small. A disadvantage, however, of the latter is that the in-feed has to be restricted and that in some cases various cycles of machining are necessary for performing the desired processing, otherwise the workpiece shifts as a result of too heavy a re-setting.

In order to solve the afore-mentioned and other disadvantages the invention provides a gripping device for workpieces wherein the latter are positively clamped at their upper face by means of a grip and wherein said grip is attached to a rotatable arm, support or connection which is rotatable also during the gripping action so that free passage can be offered to a mill.

For that purpose the gripping device for workpieces essentially consists in the combination of a clamping table; a grip that is attached to an arm rotatable around the clamping table, the rotation axis of the latter passing right through the work face of said clamping table; and means for moving the grip at least towards the work face in order to clamp a workpiece between said grip and said work face of the clamping table, the arm to which the grip is fixed, however, remaining rotatable while the workpiece is being gripped.

In order to better show the features of the present invention, a number of preferred embodiments are described hereinafter by way of examples without any limiting character and with reference to the accompanying drawings wherein :

Figure 1 represents a view of a gripping device;
Figure 2 represents a top view of figure 1;
Figure 3 represents a variant of the gripping device according to figure 1;
Figures 4 and 5 represent variants of the part that in figure 3 is indicated with F4, F5.

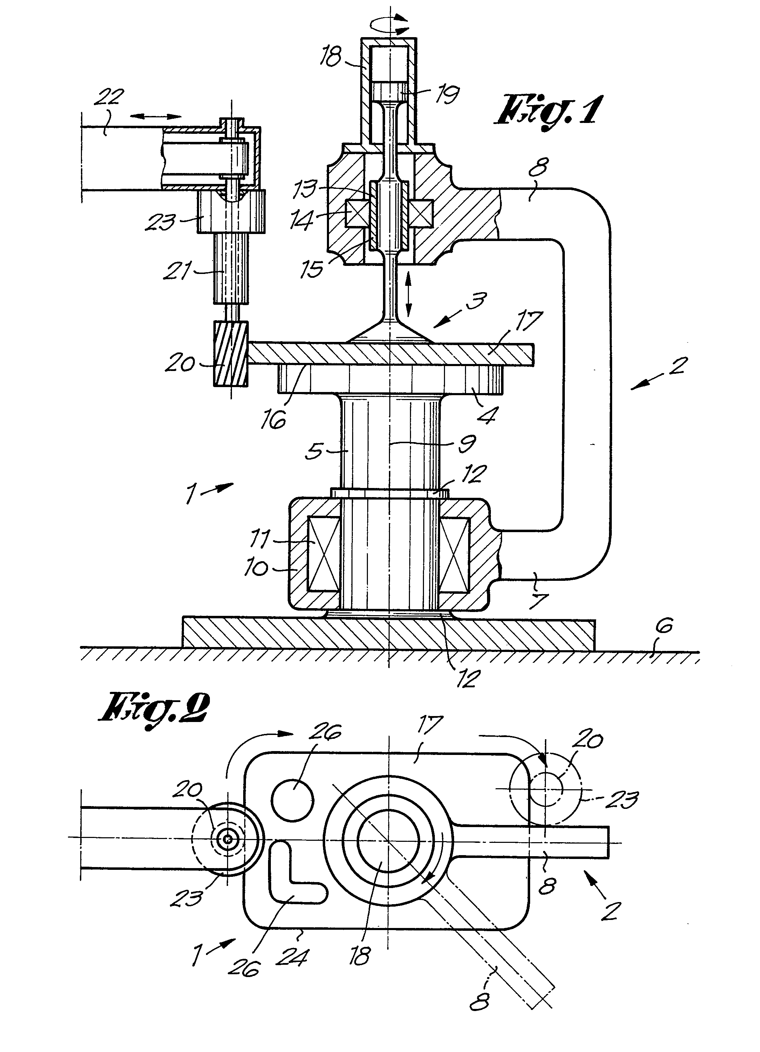

According to figure 1, the gripping device according to the present invention essentially consists of a clamping table 1, a rotatable arm 2 and a grip 3. The clamping table 1 is constituted by a working platform 4 and a support 5, which, e.g., is fixed to the floor 6 of a workshop.

Arm 2 is substantially U-shaped, the legs of this U-shape being formed by the parts 7 and 8 that extend respectively under and above the working platform 4 of said clamping table 1. The entire arm 2 is fixed to said clamping table 1 via a vertical rotatary shaft 9. Therefore, the bottom part 7 of arm 2 is coupled to support 5 by means of a fastening part 10 and bearings 11 provided therein. Further, arm 2 in this embodiment is secured against any vertical sliding by means of elements 12 consisting, e.g., of collars.

Grip 3 is fixed in the upper part 8 of said arm 2, in this case vertically, slidably as well as rotatably, by means of a rod 13, bearings 14 and, e.g., a sleeve 15.

In addition, the device is still provided with means for moving grip 3 from and to the work face 16 of the working platform 4 in order to clamp a workpiece 17.

According to the embodiment of figure 1, those means essentially consist of a pneumatic cylinder 18 which is fixed to the upper part 8 of arm 2 and whose plunger 19 is connected to said rod 13 to which grip 3 has been mounted.

Moreover, in figure 1 a part of a milling machine is visible. Herein a cutter 20 is provided in a cutter or spindle head 21, which is movable by means of a controlled arm 22, e.g. according to two principal direction axes lying in a plane parallel to said work face 16. Preferably the cutter head 21 is provided with a stop shoulder 23 that can come into contact with said arm 2.

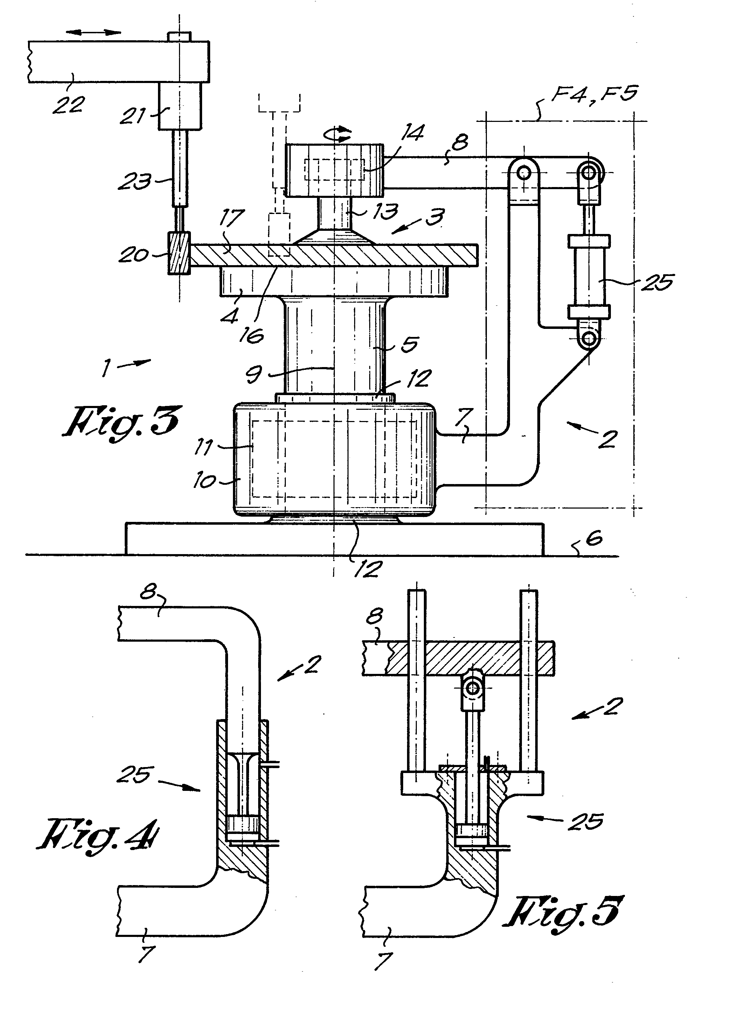

The operation of the gripping device according to the present invention can be simply deduced from figures 1 and 2.

The workpiece 17 is placed on the work face 16 of clamping table 1, whereafter grip 3 clamps this workpiece because an outward movement is imposed on the pneumatic cylinder 18. Then cutter 20 is commanded by arm 22 in such a way that, e.g., it covers the whole side face 24 of the workpiece 17. As represented in figure 2, arm 2 will be rotated aside as soon as the stop shoulder 23 of the cutter head 21 butts the upper part 8 of said arm 2, however, without arising any loss of the clamping force of grip 3 on said workpiece 17.

According to another possibility, the arm 22 as well as the cutter head 21 may be stationary. In this case the clamping table 1 together with the entire gripping device moves in such a way that the required processings take place. It is also avoided hereby that the construction of arm 2, which is substantially formed by the pneumatic cylinder 18, would constitute an obstacle to the passage of arm 22 of the milling machine.

In figure 3 an embodiment of the gripping device is represented wherein said grip 3 is fixed exclusively rotatably and not slidably in the upper part 8 of arm 2 by means of rod 13 fixed to said grip 3. The positive movement of grip 3 is hereby obtained by commanding the entire upper part 8 by means of a pressure cylinder 25. In the embodiment of figure 3 this is realized by executing said upper part 8 as a lever, whereas in the variants according to figures 5 and 6 such is realized by means of a telescopic and a usual extensible connection respectively between parts 7 and 8.

Another possibility, that is not represented in the figures, consists in moving grip 3 by building in rod 13 into the upper part 8 of arm 2 by means of a pneumatic membrane cylinder. Membrane cylinders of that kind are powerful and occupy little room.

In the latter embodiment and the one according to figures 3 to 5, the construction of the upper part 8 is relatively simple and requires little room. This offers the advantage that arm 22 of the milling machine can freely move over arm 2 of the gripping device. As represented in figure 3, it is even possible to allow cutter head 21 to come above the upper part 8, wherein the stop shoulder 23 may then have a small diameter, so that relatively deep lateral millings can be made in the workpiece 17. The latter is schematically elucidated by the position of the cutter represented in dash line.

Obviously, the means for tightening grip 3 are of many kinds and may also be manual such as a spindle or the like.

Preferably, however, a pneumatic cylinder is used as it offers the advantage that the pressure force of grip 3 on the workpiece 17 can be adjusted very simply.

As a matter of fact, the present gripping device for workpieces is not only intended for being used in milling machines and for processing the side faces 24 of workpieces 17. So, in such gripping device, e.g., processings can be provided for making recesses 26 as represented in figure 2. The clamping table 1 can make part of whatever processing machine, such as a milling machine, a drilling machine, a planer, etc.

The present invention is by no means limited to the embodiments given by way of examples and represented in the accompanying drawings, but such a gripping device for workpieces can be realized in any form and dimensions, without leaving the scope of the invention.

Claims

1. Gripping device for workpieces, characterized thereby that it mainly consists of the combination of a clamping table (1); a grip (3) which is rotatably fixed to an arm (2) rotatable around said clamping table (1), the rotation axis (9) of the latter passing right through the work face (16) of said clamping table (1); means (18-24) for moving said grip (3) at least towards said work face (16) in order to clamp a workpiece (17) between said grip (3) and said work face (16) of said clamping table (1), said arm (2), however, to which said grip (3) is fixed remaining rotatable when said workpiece (17) is being clamped.

2. Gripping device according to claim 1, characterized thereby that said rotatable arm (2) is substantially U-shaped, the parts (7-8) constituting the legs thereof extending respectively under and above the working platform (4) of said clamping table (1).

3. Gripping device according to claim 2, characterized thereby that said part (8) of said arm (2) extending under the working platform (4) of said clamping table (1) is equipped with a fixing part (10) with which said arm (2) is rotatably fixed to said clamping table (1).

4. Gripping device according to claim 3, characterized thereby that said clamping table (1) essentially consists of a working platform (4) and a support (5) provided under it, said fixing part (10) of said arm (2) being rotatably coupled to said support.

5. Gripping device according to any of the foregoing claims, characterized thereby that said grip (3) is rotatably fixed to part (8) of said arm (2), which extends above said clamping table (1).

6. Gripping device according to any of the foregoing claims, characterized thereby that said arm (2) is secured against any vertical movement in relation to said clamping table (1) by means of elements (12) and that the means for moving said grip (3) at least towards the work face are provided at said grip (3) and/or at part (8) of said arm (2), which extends at the side of said work face (16).

7. Gripping device according to any of the foregoing claims, characterized thereby that the means for moving said grip (3) at least towards the work face (16) consist of a pressure cylinder (18, 25).

8. Gripping device according to claim 7, characterized thereby that said pressure cylinder (18) is mounted directly between said grip (3) and said arm (2).

9. Gripping device according to claim 7, characterized thereby that said part (8) of said arm (2) extending along the side of said work face (16) consists of a lever, and that the pressure cylinder (25) is mounted between said part (8) and the rest of said arm (2).

10. Gripping device according to claim 7, characterized thereby that said part (8) of said arm (2) to which grip (3) is fixed, can be slided as a whole in relation to the remaining part of said arm (2) by means of a slidable connection, said pressure cylinder (25) being mounted between both parts (7-8) of said arm (2).

11. Gripping device according to any of the foregoing claims, characterized thereby that the tool (20) is stationary and the clamping table (1) is movable.

12. Gripping device according to any of claims 1 to 10, characterized thereby that said clamping table (1) is rigidly attached to a floor (6) and said tool (20) is movable.

13. Gripping device according to any of the foregoing claims, characterized thereby that said clamping table (1) is a part of a processing machine.

**Fig.1**

**Fig.2**

0203650
2/2

Fig.3

Fig.4

Fig.5